# EUROPÄISCHE PATENTSCHRIFT

(11) **EP 3 489 057 B1**
(45) Veröffentlichungstag und Bekanntmachung des Hinweises auf die Patenterteilung: **07.10.2020**
(21) Anmeldenummer: 18206448.5
(22) Anmeldetag: 15.11.2018
(51) Int. Cl.: B60K 1/00, B60W 10/02, B60W 10/08, B60W 30/186, B60K 17/35, B60W 50/00

(54) **VERFAHREN ZUR STEUERUNG EINES ANTRIEBSSYSTEMS FÜR MINDESTENS EINE ACHSE EINES KRAFTFAHRZEUGES**
METHOD FOR CONTROLLING A DRIVE SYSTEM FOR AT LEAST ONE AXLE OF A MOTOR VEHICLE
PROCÉDÉ DE COMMANDE D'UN SYSTÈME D'ENTRAÎNEMENT POUR AU MOINS UN ESSIEU D'UN VÉHICULE AUTOMOBILE

(30) Priorität: 24.11.2017 DE 102017127816
(43) Veröffentlichungstag der Anmeldung: 29.05.2019
(73) Patentinhaber: GKN Automotive Ltd., West Midlands, B37 7YE (GB)
(72) Erfinder: Ruiters, Volker René, 53721 Siegburg (DE); Kaiser, Gerd, 74931 Lobbach (DE); Fitz, Rudolf, 53844 Troisdorf (DE); Blaj, Emanuel, 51429 Bergisch Gladbach (DE); Sontheim, Florian, 53844 Troisdorf (DE); Cordero, Enrique, 51103 Köln (DE); Bruening, Rainer, 48431 Rheine (DE)
(74) Vertreter: Rössler, Matthias

(56) Entgegenhaltungen:
- DE-A1- 19 800 327
- DE-A1-102008 046 843
- DE-U1-202013 003 847

## Beschreibung

Die vorliegende Erfindung betrifft ein Verfahren zur Steuerung eines Antriebssystems für mindestens eine Achse und bevorzugt für genau eine Achse eines Kraftfahrzeuges. Das Antriebssystem umfasst zumindest eine elektrische Maschine als Antriebseinheit, eine von der Antriebseinheit angetriebene Antriebswelle, eine erste Abtriebswelle und eine zweite Abtriebswelle sowie eine die Antriebswelle mit der ersten Abtriebswelle verbindende erste Kupplung und eine die Antriebswelle mit der zweiten Abtriebswelle verbindende zweite Kupplung. Weiter ist eine Steuereinheit zur Regelung der Antriebseinheit und der Kupplungen vorgesehen. Die Kupplungen sind den Abtriebswellen von unterschiedlichen Achsen oder bevorzugt einer gemeinsamen Achse zugeordnet.

Derartige Antriebssysteme sind z. B. für die Weiterleitung und bedarfsgerechte Aufteilung eines von der Antriebseinheit bereitgestellten Drehmoments vorgesehen.

Es besteht ein ständiges Bedürfnis, Antriebssysteme möglichst so zu steuern, dass eine schnelle Anpassung an variierende Fahrsituationen und sich verändernde Betriebspunkte ermöglicht wird. Dabei sollen eine thermische oder mechanische Überbelastung der Komponenten des Antriebssystems und ein daraus folgendes ggf. vorzeitiges Versagen der Komponenten vermieden werden.

Die DE 198 00 327 A1 offenbart ein Regelsystem für ein vierradgetriebenes Kraftfahrzeug. Das Kraftfahrzeug weist neben einer permanent angetriebenen Achse ein Differential an einer zuschaltbaren Achse auf.

Die DE 10 2008 046 843 A1 ist auf ein Verfahren zur Steuerung einer Verbrennungskraftmaschine gerichtet. Dabei soll in bestimmten Betriebspunkten ein automatisch erfolgender Ausgleich eines einsetzenden Verlustmomentes (z. B. durch Betreiben eines Klimakompressors) unterlassen werden.

Die DE 20 2013 003 847 U1 ist auf eine Antriebseinheit umfassend einen Elektromotor gerichtet, wobei zwei über den Elektromotor angeriebene Antriebswellen über jeweils eine Kupplung mit dem Elektromotor verbunden sind. Über die Kupplungen soll die Leistungsregelung der Antriebseinheit erfolgen.

Hiervon ausgehend ist es Aufgabe der vorliegenden Erfindung, die eingangs genannten Nachteile und Probleme zumindest teilweise zu lösen und insbesondere ein hierfür geeignetes Verfahren zur Steuerung eines Antriebssystems (während des Betriebes eines Kraftfahrzeuges) vorzuschlagen. Das Verfahren soll insbesondere ermöglichen, dass Komponenten des Antriebssystems vor Überbelastung geschützt sind, wobei dabei eine möglichst schnelle und genaue Übertragung und Aufteilung eines z. B. von einem Fahrer des Kraftfahrzeuges gewünschten Antriebsdrehmoments über die Kupplungen auf die Räder mindestens einer Achse ermöglicht werden.

Hierzu tragen ein Verfahren gemäß den Merkmalen des Patentanspruchs 1 und ein Kraftfahrzeug gemäß den Merkmalen des Patentanspruchs 4 bei. Es wird ein Verfahren zur Steuerung eines Antriebssystems für mindestens eine Achse eines Kraftfahrzeuges vorgeschlagen. Das Antriebssystem umfasst zumindest
- eine elektrische Maschine als Antriebseinheit,
- eine von der Antriebseinheit angetriebene Antriebswelle,
- eine erste Abtriebswelle und eine zweite Abtriebswelle,
- eine die Antriebswelle mit der ersten Abtriebswelle verbindende erste Kupplung,
- eine die Antriebswelle mit der zweiten Abtriebswelle verbindende zweite Kupplung, und
- eine Steuereinheit zur Regelung der Antriebseinheit und der Kupplungen.

Das Verfahren zur Steuerung eines Antriebssystems für mindestens eine Achse eines Kraftfahrzeuges weist zumindest die folgenden Schritte auf:
a) Ermitteln eines über die erste Kupplung auf die erste Abtriebswelle (im aktuellen Betriebspunkt) höchstens übertragbaren (geschätzten) ersten Drehmoments und Ermitteln eines über die zweite Kupplung auf die zweite Abtriebswelle (im aktuellen Betriebspunkt) höchstens übertragbaren (geschätzten) zweiten Drehmoments;
b) Begrenzen eines durch die Antriebseinheit zum Antrieb der ersten Abtriebswelle und der zweiten Abtriebswelle bereitstellbaren Antriebsdrehmoments in Abhängigkeit von einer Summe des ersten Drehmoments und des zweiten Drehmoments.

Das Verfahren kann zudem zumindest die folgenden auf Schritt b) (unmittelbar und/oder verzögert) folgende Schritte aufweisen:
c) Feststellen eines gewünschten Antriebsdrehmoment, das das bereitstellbare Antriebsdrehmoment übersteigt, und
d) Betreiben der Antriebseinheit mit höchstens dem bereitstellbaren Antriebsdrehmoment.

Die obige (nicht abschließende) Einteilung der Verfahrensschritte in a) bis d) soll vorrangig nur zur Unterscheidung dienen und keine Reihenfolge und/oder Abhängigkeit erzwingen. Auch die Häufigkeit der Verfahrensschritte z. B. während der Einrichtung und/oder des Betriebes des Antriebssystems kann variieren. Ebenso ist möglich, dass Verfahrensschritte einander zumindest teilweise zeitlich überlagern und/oder dass einzelne oder mehrere Verfahrensschritte wiederholt werden.

Das Verfahren zur Steuerung betrifft insbesondere die Regelung der Kupplungen des Antriebssystems, so dass diese zu vorgegebenen Zeitpunkten oder sogar jeder Zeit durch eine Anpresskraft betätigt werden können und damit ein von der Antriebseinheit bereitgestelltes Drehmoment in gewünschter Weise auf die Räder mindestens einer, bevorzugt gemeinsamen, Achse des Kraftfahrzeuges übertragen werden kann.

Insbesondere ist das Verfahren zur Steuerung eines Antriebssystems vorgesehen, bei dem an einer gemeinsamen Achse des Kraftfahrzeuges zwei Kupplungen vorgesehen sind, wobei über jede der zwei Kupplungen jeweils ein Rad des Kraftfahrzeuges mit der Antriebseinheit des Kraftfahrzeuges drehmomentübertragend verbunden wird. Die zwei Kupplungen können das sonst übliche Differential ersetzen, durch das unterschiedliche Drehzahlen der Räder ausgeglichen werden können. Die Kupplungen können z. B. hydraulisch oder elektromechanisch betätigbare Kupplungen sein.

Der Aufbau derartiger Kupplungen und Antriebssysteme kann wie folgt beschrieben werden: Es können z. B. Lamellenkupplungen als Kupplungen eingesetzt werden, bei denen Außenlamellen mit einem Lamellenaußenträger und Innenlamellen mit einem Lamelleninnenträger drehfest verbunden sind und jeder Lamellenträger mit der Antriebswelle oder der jeweiligen Abtriebswelle drehfest verbunden ist. Infolge einer Beaufschlagung mit einer in einer axialen Richtung wirkenden Anpresskraft (infolge des Betätigungsdrucks) werden die Lamellen, bei anderen Kupplungen die Reibpartner oder eben die jeweils zur Erzeugung einer reibschlüssigen Verbindung zwischen drehmomentübertragenden Teilen der jeweiligen Kupplung, miteinander in Kontakt gebracht, so dass ein Drehmoment von der Antriebswelle über die Kupplung auf die jeweilige Abtriebswelle übertragen werden kann.

Gerade bei Antriebssystemen mit einer elektrischen Maschine als Antriebseinheit kann es (z. B. bei niedrigen Drehzahlen und ggf. gleichzeitig hohen bereitgestellten Antriebsdrehmoment) vorkommen, dass ein von der Antriebseinheit bereitgestelltes Antriebsdrehmoment zumindest zeitweise größer ist als ein von den Kupplungen (in einem aktuellen Betriebspunkt) in Summe höchstens übertragbares Drehmoment (also Summe aus erstem Drehmoment und zweitem Drehmoment). In dieser Fahrsituation bzw. in diesem Betriebspunkt, wenn also das von der Antriebseinheit bereitgestellte Antriebsdrehmoment größer ist als die Summe aus erstem Drehmoment und zweitem Drehmoment, beschleunigt die elektrische Maschine bzw. die Antriebswelle schneller als das Kraftfahrzeug bzw. die Abtriebswellen. Damit entsteht an zumindest einer Kupplung ein Schlupf, der zu hohen Reibleistungen in den Kupplungen (zumindest einer Kupplung) führt. Die daraus resultierende thermische Belastung kann eine Kupplung zerstören oder zumindest schädigen. Weiter wird so die Effizienz des Antriebssystems reduziert und die CO2-Bilanz verschlechtert.

Grundsätzlich kann ein geringer Schlupf (ein sogenannter Mikro-Schlupf) durchaus zulässig und auch beabsichtigt sein. Dieser wird insbesondere deswegen zugelassen, weil so festgestellt werden kann, dass das gewünschte Drehmoment in der beabsichtigen Verteilung (also vorbestimmte Anteile des Drehmoments an jedes Rad des Kraftfahrzeug) über die Kupplungen übertragen wird. Die thermische Belastung durch den Mikro-Schlupf führt jedoch nicht zu einer unzulässigen thermischen Belastung der Kupplungen.

Insbesondere beträgt der Mikro-Schlupf mehr als 0 Umdrehungen pro Minute Drehzahldifferenz zwischen der Antriebswelle und einer Abtriebswelle. Insbesondere beträgt der Mikro-Schlupf zwischen 1 und 10 Umdrehungen pro Minute, bevorzugt weniger als 5 Umdrehungen pro Minute, Drehzahldifferenz.

Derartige Betriebspunkte liegen z. B. vor, wenn das Kraftfahrzeug sich in einer Kurvenfahrt befindet und die Räder einer gemeinsamen Achse unterschiedliche Geschwindigkeiten aufweisen sollten. Hierbei wird ein über die kurveninnere Kupplung übertragenes Drehmoment verringert, um ein Gier-Verhalten des Kraftfahrzeuges zu verbessern.

Durch das vorgeschlagene Verfahren kann ein durch die Antriebseinheit zum Antrieb der ersten Abtriebswelle und der zweiten Abtriebswelle bereitstellbares Antriebsdrehmoment in Abhängigkeit von einer Summe des ersten Drehmoments und des zweiten Drehmoments begrenzt werden. Insbesondere kann das von der Antriebseinheit bereitgestellte Antriebsdrehmoment höchstens der Summe von erstem Drehmoment und zweitem Drehmoment entsprechen. Ein höheres Antriebsdrehmoment würde das Kraftfahrzeug nicht beschleunigen, sondern nur den Schlupf in zumindest einer der Kupplungen vergrößern - dies wird hiermit reduziert bzw. sogar vermieden.

Wird also z. B. von einem Fahrer des Kraftfahrzeugs (oder von der Steuereinheit) ein gewünschtes Antriebsdrehmoment angefordert (die Antriebseinheit soll also dieses gewünschte Antriebsdrehmoment als Antriebsdrehmoment bereitstellen) und insbesondere ein vorliegendes Antriebsdrehmoment geändert, so wird gemäß Schritt c) festgestellt, ob dieses gewünschte Antriebsdrehmoment das bereitstellbare Antriebsdrehmoment übersteigt. Gemäß Schritt b) ist das über die Antriebseinheit bereitstellbare Antriebsdrehmoment insbesondere bereits begrenzt, so dass die Antriebseinheit gemäß Schritt d) nur das bereitstellbare Antriebsdrehmoment erzeugt und für die Kupplungen zur Weiterleitung an die Räder bereitstellt.

Das Verfahren, und insbesondere nur Schritt a), wird insbesondere kontinuierlich oder ausschließlich (und dann kontinuierlich oder zumindest periodisch) in bestimmten Betriebspunkten der Antriebseinheit oder bei bestimmten Fahrsituationen durchgeführt.

Kontinuierlich heißt demnach insbesondere, dass das Verfahren unabhängig von vorgebbaren Betriebspunkten bzw. Fahrsituationen immer und ständig eingeleitet. bzw. durchgeführt wird.

Gemäß einer anderen Ausgestaltung des Verfahrens wird das Verfahren ausschließlich (und dann kontinuierlich oder zumindest periodisch (zu vorgebbaren Zeitpunkten) in bestimmten Betriebspunkten der Antriebseinheit oder bei bestimmten Fahrsituationen durchgeführt. Insbesondere wird eine Periode in Abhängigkeit von zumindest einem der folgenden Parameter bestimmt: Der Zeit, der Betriebsdauer des Antriebssystems, der mehr oder weniger intensiven Beanspruchung des Antriebssystems. Eine Periode kann einen Bruchteil einer Sekunde, mindestens eine Sekunde oder mindestens 5 Sekunden betragen. Die Periode kann insbesondere in Abhängigkeit von der Beanspruchung des Antriebsystems bzw. der Kupplungen variabel sein.

Gemäß Schritt a) wird das über die erste Kupplung auf die erste Abtriebswelle höchstens übertragbare erste Drehmoment und das über die zweite Kupplung auf die zweite Abtriebswelle höchstens übertragbare zweite Drehmoment ermittelt. Die weiteren Schritte b) sowie c) und d) werden insbesondere nur dann durchgeführt, wenn die Summe aus erstem Drehmoment und zweitem Drehmoment einen Grenzwert überschreitet (z. B. 75 % eines Nenndrehmoments der Antriebseinheit).

Insbesondere wird, während ein gewünschtes Antriebsdrehmoment das bereitstellbare Antriebsdrehmoment übersteigt und gemäß Schritt d) eine Begrenzung des gewünschten Antriebsdrehmoments auf höchstens das bereitstellbare Antriebsdrehmoment erfolgt, das gewünschte Antriebsdrehmoment bei der Regelung der Kupplungen berücksichtigt. Diese Berücksichtigung des gewünschten Antriebsdrehmoments erfolgt insbesondere so, dass zumindest eine Reaktionszeit mindestens einer Kupplung auf eine gewünschte Zustandsänderung verkürzt oder dass ein Kupplungsschlupf bei einer Beschleunigungsphase reduziert wird.

Die Steuereinheit betreibt das Antriebssystem insbesondere so, dass jede Möglichkeit zur Weiterleitung des gewünschten Antriebsdrehmoments über die Kupplungen an die Räder möglichst schnell genutzt wird. Insbesondere wird das bereitstellbare Antriebsdrehmoment so schnell wie möglich auf das gewünschte Antriebsdrehmoment gesteigert, wobei während dieser Steigerung die Vorgaben hinsichtlich der Unterdrückung eines Schlupfes bzw. hinsichtlich der Einhaltung eines Mikro-Schlupfes berücksichtigt werden.

Insbesondere werden die Schritte a) bis d) kontinuierlich weiter durchgeführt, bis das bereitgestellte Antriebsdrehmoment das (aktuell) gewünschte Antriebsdrehmoment erreicht.

In Schritt a) kann zumindest einer (bevorzugt alle) der folgenden Parameter geprüft und berücksichtigt werden:
- eine Temperatur zumindest jeweils einer Komponente (z. B. ein Kühlfluid oder Schmierfluid, eine Reiblamelle, ein Gehäuse, etc.) der ersten Kupplung und der zweiten Kupplung;
- eine Anpresskraft, die jeweils zur Erzeugung einer reibschlüssigen Verbindung zwischen drehmomentübertragenen Teilen der ersten Kupplung und der zweiten Kupplung vorliegt;
- eine erste Drehzahldifferenz zwischen der Antriebswelle und der ersten Abtriebswelle und eine zweite Drehzahldifferenz zwischen der Antriebswelle und der zweiten Abtriebswelle
- eine Reibleistung in der ersten Kupplung und in der zweiten Kupplung.

Insbesondere ist durch die Betätigung jeder Kupplung jeweils ein Rad einer gemeinsamen Achse des Kraftfahrzeuges mit der Antriebseinheit drehmomentübertragend verbindbar.

Insbesondere ist zwischen der Antriebseinheit und den Abtriebswellen ein Getriebe mit einer variablen Übersetzung angeordnet. Variable Übersetzung bedeutet insbesondere, dass nicht eine einzige konstante Übersetzung vorliegt, sondern dass die Übersetzung verändert werden kann, z. B. in Stufen oder auch kontinuierlich.

Zwischen der Antriebseinheit und den Abtriebswellen kann alternativ kein Getriebe oder ein Getriebe mit einer einzigen festen Übersetzung angeordnet sein.

Zumindest eine der beiden Kupplungen kann eine hydraulisch betätigte Kupplung sein, bevorzugt sind das beide Kupplungen. Bei einer hydraulisch betätigten Kupplung wird der Anpressdruck über ein Hydraulikfluid auf die Kupplung übertragen. Das Hydraulikfluid kann über eine (auch elektrisch betreibbare) Pumpe unter Druck gesetzt werden.

Zumindest eine der beiden Kupplungen kann eine elektrisch bzw. elektromechanisch betätigte Kupplung sein, bevorzugt sind das beide Kupplungen. Bei einer elektrisch betätigten Kupplung wird der Anpressdruck unmittelbar durch eine weitere elektrische Maschine erzeugt, z. B. durch eine über die Maschine verdrehbare Rampenanordnung.

Insbesondere kann infolge der Betätigung jede der Kupplungen jeweils ein Rad der gemeinsamen Achse des Kraftfahrzeuges mit der Antriebseinheit drehmomentübertragend verbunden werden.

Bevorzugt ist zumindest eine Kupplung, insbesondere sind beide Kupplungen, eine Lamellenkupplung.

Es wird weiter ein Kraftfahrzeug vorgeschlagen, zumindest aufweisend ein Antriebssystem für mindestens eine Achse des Kraftfahrzeuges. Das Antriebssystem umfasst zumindest
- eine elektrische Maschine als Antriebseinheit,
- eine von der Antriebseinheit angetriebene Antriebswelle,
- eine erste Abtriebswelle und eine zweite Abtriebswelle sowie
- eine die Antriebswelle mit der ersten Abtriebswelle verbindende erste Kupplung und
- eine die Antriebswelle mit der zweiten Abtriebswelle verbindende zweite Kupplung und weiter
- eine Steuereinheit zur Regelung der Antriebseinheit und der Kupplungen, wobei die Steuereinheit zur Durchführung des vorgeschlagenen Verfahrens eingerichtet und ausgelegt ist, bzw. das Verfahren im Betrieb des Kraftfahrzeuges durchführt.

Die Ausführungen zu dem Verfahren gelten insbesondere auch für das Kraftfahrzeug und umgekehrt.

Insbesondere sind die beiden Kupplungen zur Übertragung von Drehmomenten an einer Achse eines Kraftfahrzeuges angeordnet, so dass durch das Betätigen der ersten Kupplung ein erstes Rad einer Achse und durch das Betätigen der zweiten Kupplung ein zweites Rad derselben Achse des Kraftfahrzeuges mit der Antriebseinheit drehmomentübertragend verbunden wird. Die Kupplungen sind also insbesondere keine Kupplung eines Kraftfahrzeuges, die zwischen der Antriebseinheit und einem schaltbaren Getriebe des Kraftfahrzeuges angeordnet ist.

Derartige, gemeinsam an einer Achse angeordnete Kupplungen müssen (oft) sprunghafte Änderungen eines ersten Drehmoments verarbeiten und dieses in vorbestimmter Weise an die Räder weiterleiten.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll.

Gleiche Bezugszeichen bezeichnen gleiche Gegenstände, so dass ggf. Erläuterungen aus anderen Figuren ergänzend herangezogen werden können. Es zeigen schematisch:
Fig. 1: ein Kraftfahrzeug mit einem Antriebssystem zum Antrieb jeweils eines Rades des Kraftfahrzeugs; und
Fig. 2: einen Ablauf eines Verfahrens zur Steuerung eines Antriebssystems.

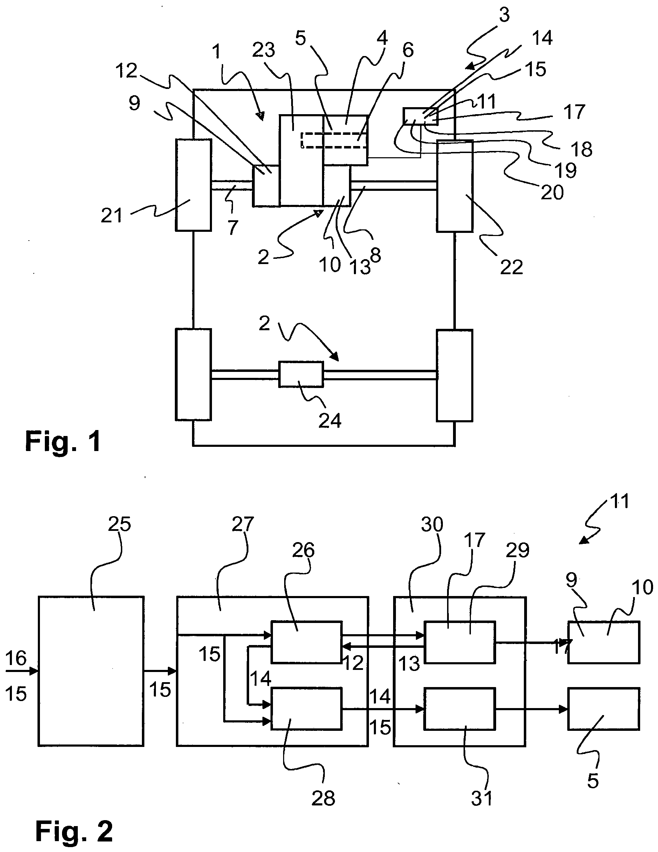

Fig. 1 zeigt ein Kraftfahrzeug 3 mit einem Antriebssystem 1 zum Antrieb jeweils eines ersten Rades 21 und eines zweiten Rades 22 einer gemeinsamen Achse 2 des Kraftfahrzeugs 3. Das Antriebssystem 1 umfasst eine elektrische Maschine 4 als Antriebseinheit 5, eine von der Antriebseinheit 5 angetriebene Antriebswelle 6, eine erste Abtriebswelle 7 und eine zweite Abtriebswelle 8 sowie eine die Antriebswelle 6 mit der ersten Abtriebswelle 7 verbindende erste Kupplung 9 und eine die Antriebswelle 6 mit der zweiten Abtriebswelle 8 verbindende zweite Kupplung 10. Weiter ist eine Steuereinheit 11 zur Regelung der Antriebseinheit 15 und der beiden Kupplungen 9, 10 vorgesehen.

Hier ist ein Antriebssystem 1 dargestellt, bei dem an einer gemeinsamen Achse 2 des Kraftfahrzeuges 3 zwei Kupplungen 9, 10 vorgesehen sind, wobei über jede der zwei Kupplung 9, 10 jeweils ein Rad 21, 22 des Kraftfahrzeuges 3 mit der Antriebseinheit 5 des Kraftfahrzeuges 3 drehmomentübertragend verbunden wird. Die zwei Kupplungen 9, 10 ersetzen ein sonst übliches Differential 24 (hier an der anderen Achse 2 des Kraftfahrzeugs 3 dargestellt), durch das unterschiedliche Drehzahlen der dort angeordneten Räder ausgeglichen werden können.

Zwischen der Antriebseinheit 5 und den Abtriebswellen 7, 8 ist ein Getriebe 23 mit einer variablen Übersetzung angeordnet.

Durch das vorgeschlagene Verfahren soll ein durch die Antriebseinheit 5 zum Antrieb der ersten Abtriebswelle 7 und der zweiten Abtriebswelle 8 bereitstellbares Antriebsdrehmoment in Abhängigkeit von einer Summe des ersten Drehmoments 12 und des zweiten Drehmoments 13 begrenzt werden. Dabei soll das von der Antriebseinheit 5 bereitgestellte Antriebsdrehmoment höchstens der Summe von erstem Drehmoment 12 und zweitem Drehmoment 13 entsprechen.

Wird also z. B. von einem Fahrer des Kraftfahrzeugs 3 ein gewünschtes Antriebsdrehmoment 15 angefordert (die Antriebseinheit 5 soll also dieses gewünschte Antriebsdrehmoment 15 als Antriebsdrehmoment bereitstellen), so wird gemäß Schritt c) festgestellt, ob dieses gewünschte Antriebsdrehmoment 15 das bereitstellbare Antriebsdrehmoment 14 übersteigt. Gemäß Schritt b) ist das über die Antriebseinheit 5 bereitstellbare Antriebsdrehmoment 14 bereits begrenzt, so dass die Antriebseinheit 5 gemäß Schritt d) nur das bereitstellbare Antriebsdrehmoment 14 erzeugt und für die Kupplungen 9, 10 zur Weiterleitung an die Räder 21, 22 bereitstellt.

Gemäß Schritt a) wird das über die erste Kupplung 9 auf die erste Abtriebswelle 7 höchstens übertragbare erste Drehmoment 12 und das über die zweite Kupplung 10 auf die zweite Abtriebswelle 8 höchstens übertragbare zweite Drehmoment 13 ermittelt.

In Schritt a) können die folgenden Parameter geprüft und berücksichtigt werden: Eine Temperatur 17 zumindest jeweils einer Komponente der ersten Kupplung 9 und der zweiten Kupplung 10, eine Anpresskraft 18, die jeweils zur Erzeugung einer reibschlüssigen Verbindung zwischen drehmomentübertragenen Teilen der ersten Kupplung 9 und der zweiten Kupplung 10 vorliegt, eine erste Drehzahldifferenz 19 zwischen der Antriebswelle 6 und der ersten Abtriebswelle 7 und eine zweite Drehzahldifferenz 20 zwischen der Antriebswelle 6 und der zweiten Abtriebswelle 8, eine Reibleistung in der ersten Kupplung 9 und in der zweiten Kupplung 10.

Fig. 2 zeigt einen Ablauf eines Verfahrens zur Steuerung eines Antriebssystems 1. Im Rahmen einer Zustandsänderung 16 (z. B. Änderung eines Betriebspunkts oder einer Fahrsituation) wird ein gewünschtes Antriebsdrehmoment 15 durch ein erstes Modul 25 der Steuereinheit 11 ermittelt und an ein erstes Teilmodul 26 und ein zweites Teilmodul 28 des zweiten Moduls 27 weitergeleitet. In dem ersten Modul 25 werden die Eingangssignale für die weiteren Module 27, 30 aufbereitet.

In einem ersten Teilmodul 26 eines zweiten Moduls 27 werden fahrdynamische Vorgaben für die Kupplungen 9, 10 berechnet und an ein drittes Teilmodul 29 eines dritten Moduls 30 weitergeleitet. Das dritte Teilmodul 29 errechnet die für die Übertragung der geforderten Drehmomente benötigte Anpresskraft 18 der jeweiligen Kupplung 9, 10 und leitet diese Steuerungsbefehle an die Kupplungen 9, 10 weiter. Gleichzeitig schätzt bzw. errechnet das dritte Teilmodul 29 die aktuell übertragbaren Drehmomente für jede Kupplung 9, 10 im aktuellen Betriebspunkt und bildet das bereitstellbare Summendrehmoment (im Falle des höchsten ersten Drehmoments 12 und des höchsten zweiten Drehmoments 13 ist dieses Summendrehmoment das bereitstellbare Antriebsdrehmoment 14) 14. Dieses Summendrehmoment wird über das erste Teilmodul 26 des zweiten Moduls 27 an ein zweites Teilmodul 28 des zweiten Moduls 27 geleitet. Darin wird das gewünschte Antriebsdrehmoment 15 mit dem bereitstellbaren Antriebsdrehmoment 14 verglichen und entweder das gewünschte Antriebsdrehmoment 15 (wenn es kleiner als das bereitstellbare Antriebsdrehmoment 14 ist oder diesem entspricht) oder das bereitstellbare Antriebsdrehmoment 14 (wenn das gewünschte Antriebsdrehmoment 15 größer als das bereitstellbare Antriebsdrehmoment 14 ist) an ein viertes. Teilmodul 31 des dritten Moduls 30 geleitet.

Das vierte Teilmodul 31 steuert die Schütze der Maschine 4 und regelt damit die Antriebseinheit 5.

Während ein gewünschtes Antriebsdrehmoment 15 das bereitstellbare Antriebsdrehmoment 14 übersteigt und gemäß Schritt d) eine Begrenzung des gewünschten Antriebsdrehmoments 15 auf höchstens das bereitstellbare Antriebsdrehmoment 14 erfolgt, wird auch das gewünschte Antriebsdrehmoment 15 bei der Regelung der Kupplungen 9, 10 berücksichtigt. Diese Berücksichtigung des gewünschten Antriebsdrehmoments 15 erfolgt, in dem zumindest eine Reaktionszeit zumindest einer Kupplung 9, 10 auf die Zustandsänderung 16 verkürzt wird oder ein Kupplungsschlupf bei einer Beschleunigungsphase reduziert wird.

Die Steuereinheit 11 betreibt das Antriebssystem 1 dann so, dass jede Möglichkeit zur Weiterleitung des gewünschten Antriebsdrehmoments 15 über die Kupplungen 9, 10 an die Räder 21, 22 möglichst schnell genutzt wird.

Die oben genannten Parameter (Temperatur 17, Anpresskraft 18, Drehzahldifferenzen 19, 20 und Reibleistungen, hier nur Temperatur 17 dargestellt) können im dritten Teilmodul 29 des dritten Moduls 30 geprüft und berücksichtigt werden.

### Bezugszeichenliste

- 1: Antriebssystem
- 2: Achse
- 3: Kraftfahrzeug
- 4: Maschine
- 5: Antriebseinheit
- 6: Antriebswelle
- 7: erste Abtriebswelle
- 8: zweite Abtriebswelle
- 9: erste Kupplung
- 10: zweite Kupplung
- 11: Steuereinheit
- 12: erstes Drehmoment
- 13: zweites Drehmoment
- 14: bereitstellbares Antriebsdrehmoment
- 15: gewünschtes Antriebsdrehmoment
- 16: Zustandsänderung
- 17: Temperatur
- 18: Anpresskraft
- 19: erste Drehzahldifferenz
- 20: zweite Drehzahldifferenz
- 21: erstes Rad
- 22: zweites Rad
- 23: Getriebe
- 24: Differential
- 25: erstes Modul
- 26: erstes Teilmodul
- 27: zweites Modul
- 28: zweites Teilmodul
- 29: drittes Teilmodul
- 30: drittes Modul
- 31: viertes Teilmodul

## Patentansprüche

1. Verfahren zur Steuerung eines Antriebssystems (1) für mindestens eine Achse (2) eines Kraftfahrzeuges (3), wobei das Antriebssystem (1) zumindest eine elektrische Maschine (4) als Antriebseinheit (5), eine von der Antriebseinheit (5) angetriebene Antriebswelle (6), eine erste Abtriebswelle (7) und eine zweite Abtriebswelle (8) sowie eine die Antriebswelle (6) mit der ersten Abtriebswelle (7) verbindende erste Kupplung (9) und eine die Antriebswelle (6) mit der zweiten Abtriebswelle (8) verbindende zweite Kupplung (10) und weiter eine Steuereinheit (11) zur Regelung der Antriebseinheit (5) und der Kupplungen (9, 10) aufweist; wobei das Verfahren zumindest die folgenden Schritte aufweist:
a) Ermitteln eines über die erste Kupplung (9) auf die erste Abtriebswelle (7) höchstens übertragbaren ersten Drehmoments (12) und Ermitteln eines über die zweite Kupplung (10) auf die zweite Abtriebswelle (8) höchstens übertragbaren zweiten Drehmoments (13);
b) Begrenzen eines durch die Antriebseinheit (5) zum Antrieb der ersten Abtriebswelle (7) und der zweiten Abtriebswelle (8) bereitstellbaren Antriebsdrehmoments (14) in Abhängigkeit von einer Summe des ersten Drehmoments (12) und des zweiten Drehmoments (13); wobei das von der Antriebseinheit (5) bereitgestellte Antriebsdrehmoment (14) höchstens der Summe von erstem Drehmoment und zweitem Drehmoment (15) entspricht;
wobei in einem Betriebspunkt, in dem das von der Antriebseinheit (5) bereitgestellte Antriebsdrehmoment (14) größer ist als die Summe aus erstem Drehmoment (12) und zweitem Drehmoment (13), die Antriebswelle (6) schneller als die Abtriebswellen (7, 8) beschleunigt, so dass an zumindest einer Kupplung (9, 10) ein Schlupf entsteht, der zu hohen Reibleistungen in zumindest einer Kupplung (9, 10) führt.

2. Verfahren nach Patentanspruch 1, wobei das Verfahren zumindest die folgenden auf Schritt b) folgenden Schritte aufweist:
c) Feststellen eines gewünschten Antriebsdrehmoments (15), das das bereitstellbare Antriebsdrehmoment (14) übersteigt, und
d) Betreiben der Antriebseinheit (5) mit höchstens dem bereitstellbaren Antriebsdrehmoment (14).

3. Verfahren nach einem der vorhergehenden Patentansprüche, wobei in Schritt a) zumindest einer der folgenden Parameter geprüft und berücksichtigt wird:
- eine Temperatur (17) zumindest jeweils einer Komponente der ersten Kupplung (9) und der zweiten Kupplung (10);
- eine Anpresskraft (18), die jeweils zur Erzeugung einer reibschlüssigen Verbindung zwischen drehmomentübertragenen Teilen der ersten Kupplung (9) und der zweiten Kupplung (10) vorliegt;
- eine erste Drehzahldifferenz (19) zwischen der Antriebswelle (6) und der ersten Abtriebswelle (7) und eine zweite Drehzahldifferenz (20) zwischen der Antriebswelle (6) und der zweiten Abtriebswelle (8);
- eine Reibleistung in der ersten Kupplung (9) und in der zweiten Kupplung (10).

4. Kraftfahrzeug (3), zumindest aufweisend ein Antriebssystem (1) für mindestens eine Achse (2) des Kraftfahrzeuges (3), wobei das Antriebssystem (1) zumindest eine elektrische Maschine (4) als Antriebseinheit (5), eine von der Antriebseinheit (5) angetriebene Antriebswelle (6), eine erste Abtriebswelle (7) und eine zweite Abtriebswelle (8) sowie eine die Antriebswelle (6) mit der ersten Abtriebswelle (7) verbindende erste Kupplung (9) und eine die Antriebswelle (6) mit der zweiten Abtriebswelle (8) verbindende zweite Kupplung (10) und weiter eine Steuereinheit (11) zur Regelung der Antriebseinheit (5) und der Kupplungen (9, 10) aufweist, wobei die Steuereinheit (11) zur Durchführung des Verfahren nach einem der vorhergehenden Patentansprüche 1-3 eingerichtet ist.'

5. Kraftfahrzeug nach Patentanspruch 4; wobei durch die Betätigung jeder Kupplung (9, 10) ein erstes Rad (21) und ein zweites Rad (22) einer gemeinsamen Achse (2) des Kraftfahrzeuges (3) mit der Antriebseinheit (5) drehmomentübertragend verbindbar ist.

6. Kraftfahrzeug nach einem der vorhergehenden Patentansprüche 4 oder 5, wobei zwischen der Antriebseinheit (5) und den Abtriebswellen (7, 8) ein Getriebe (23) mit einer variablen Übersetzung angeordnet ist.

## Claims

1. Method for controlling a drive system (1) for at least one axle (2) of a motor vehicle (3), wherein the drive system (1) has at least an electrical machine (4) as drive unit (5), a drive shaft (6) which is driven by the drive unit (5), a first output shaft (7) and a second output shaft (8) and also a first clutch (9) which connects the drive shaft (6) to the first output shaft (7) and a second clutch (10) which connects the drive shaft (6) to the second output shaft (8), and furthermore a control unit (11) for controlling the drive unit (5) and the clutches (9, 10), wherein the method comprises at least the following steps:
a) ascertaining a first torque (12) which can be transmitted as a maximum to the first output shaft (7) via the first clutch (9) and ascertaining a second torque (13) which can be transmitted as a maximum to the second output shaft (8) via the second clutch (10);
b) limiting a drive torque (14), which can be provided by the drive unit (5) for driving the first output shaft (7) and the second output shaft (8), depending on a sum of the first torque (12) and the second torque (13); wherein the drive torque (14) which is provided by the drive unit (5) corresponds at most to the sum of the first torque and the second torque (15);
wherein in an operating point, in which the drive torque (14) which is provided by the drive unit (5) is greater than sum of the first torque (12) and the second torque (13), the drive shaft (6) accelerates more rapidly than the output shafts (7, 8), so that a slip is created on at least one clutch (9, 10), which leads to high frictional power in at least one clutch (9, 10).

2. Method according to Patent Claim 1, wherein the method exhibits at least the following steps which follow step b):
c) determining a desired drive torque (15) which exceeds the drive torque (14) which can be provided, and
d) operating the drive unit (5) with at most the drive torque (14) which can be provided.

3. Method according to one of the preceding patent claims, wherein, in step a), at least one of the following parameters is checked and taken into account:
- a temperature (17) of at least in each case one component of the first clutch (9) and of the second clutch (10);
- a contact-pressure force (18) which is present in each case for generating a frictional connection between torque-transmitting parts of the first clutch (9) and of the second clutch (10);
- a first rotation speed difference (19) between the drive shaft (6) and the first output shaft (7) and a second rotation speed difference (20) between the drive shaft (6) and the second output shaft (8);
- a frictional power in the first clutch (9) and in the second clutch (10).

4. Motor vehicle (3), at least having a drive system (1) for at least one axle (2) of the motor vehicle (3), wherein the drive system (1) has at least an electrical machine (4) as drive unit (5), a drive shaft (6) which is driven by the drive unit (5), a first output shaft (7) and a second output shaft (8) and also a first clutch (9) which connects the drive shaft (6) to the first output shaft (7) and a second clutch (10) which connects the drive shaft (6) to the second output shaft (8), and furthermore a control unit (11) for controlling the drive unit (5) and the clutches (9, 10), wherein the control unit (11) is designed to carry out the method according to one of the preceding patent claims 1 to 3.

5. Motor vehicle according to claim 4, wherein a first wheel (21) and a second wheel (22) of a common axle (2) of the motor vehicle (3) can be connected in a torque-transmitting manner to the drive unit (5) by operating each clutch (9, 10).

6. Motor vehicle according to one of the preceding patent claims 4 or 5, wherein a gearbox (23) with a variable transmission ratio is arranged between the drive unit (5) and the output shafts (7, 8).

## Revendications

1. Procédé de commande d'un système d'entraînement (1) destiné à au moins un essieu (2) d'un véhicule automobile (3), le système d'entraînement (1) comportant au moins une machine électrique (4) servant d'unité d'entraînement (5), un arbre d'entraînement (6) entraîné par l'unité d'entraînement (5), un premier arbre de sortie (7) et un deuxième arbre de sortie (8) ainsi qu'un premier accouplement (9) reliant l'arbre d'entraînement (6) au premier arbre de sortie (7) et un deuxième accouplement (10) reliant l'arbre d'entraînement (6) au deuxième arbre de sortie (8) et également une unité de commande (11) destinée à réguler l'unité d'entraînement (5) et les accouplements (9, 10) ; le procédé comportant au moins les étapes suivantes :
a) déterminer un premier couple (12) qui peut être transmis au plus au premier arbre de sortie (7) par le biais du premier accouplement (9) et déterminer un deuxième couple (13) qui peut être transmis au plus au deuxième arbre de sortie (8) par le biais du deuxième accouplement (10) ;
b) limiter un couple d'entraînement (14), qui peut être produit par l'unité d'entraînement (5) pour entraîner le premier arbre de sortie (7) et le deuxième arbre de sortie (8), en fonction de la somme du premier couple (12) et du deuxième couple (13) ; le couple d'entraînement (14) produit par l'unité d'entraînement (5) correspondant au plus à la somme du premier couple et du deuxième couple (15) ;
à un point de fonctionnement, auquel le couple d'entraînement (14) produit par l'unité d'entraînement (5) est supérieur à la somme du premier couple (12) et du deuxième couple (13), l'arbre d'entraînement (6) accélérant plus rapidement que les arbres de sortie (7, 8) de sorte qu'il se produit sur au moins un accouplement (9, 10) un patinage qui entraîne des puissances de friction élevées dans au moins un accouplement (9, 10).

2. Procédé selon la revendication 1, le procédé comprenant au moins les étapes suivantes faisant suite à l'étape b) :
c) déterminer un couple d'entraînement souhaité (15) qui dépasse le couple d'entraînement (14) qui peut être produit, et
d) faire fonctionner l'unité d'entraînement (5) avec au plus le couple d'entraînement (14) pouvant être produit.

3. Procédé selon l'une des revendications précédentes, au moins un des paramètres suivants étant vérifié et pris en compte à l'étape a) :
- une température (17) d'au moins un composant du premier accouplement (9) et du deuxième accouplement (10) ;
- une force de pression (18) qui est présente à chaque fois pour générer une liaison par friction entre des parties de transmission de couple du premier accouplement (9) et du deuxième accouplement (10) ;
- une première différence de vitesse de rotation (19) entre l'arbre d'entraînement (6) et le premier arbre de sortie (7) et une deuxième différence de vitesse de rotation (20) entre l'arbre d'entraînement (6) et le deuxième arbre de sortie (8) ;
- ne puissance de friction dans le premier accouplement (9) et dans le deuxième accouplement (10).

4. Véhicule automobile (3), comportant au moins un système d'entraînement (1) destiné à au moins un essieu (2) du véhicule automobile (3), le système d'entraînement (1) comportant au moins une machine électrique (4) servant d'unité d'entraînement (5), un arbre d'entraînement (6) entraîné par l'unité d'entraînement (5), un premier arbre de sortie (7) et un deuxième arbre de sortie (8) ainsi qu'un premier accouplement (9) reliant l'arbre d'entraînement (6) au premier arbre de sortie (7) et un deuxième accouplement (10) reliant l'arbre d'entraînement (6) au deuxième arbre de sortie (8) et également une unité de commande (11) destinée à réguler l'unité d'entraînement (5) et les accouplements (9, 10), l'unité de commande (11) étant conçue pour mettre en œuvre le procédé selon l'une des revendications précédentes 1 à 3.

5. Véhicule automobile selon la revendication 4, une première roue (21) et une deuxième roue (22) d'un essieu commun (2) du véhicule automobile (3) pouvant être reliées en transmission de couple à l'unité d'entraînement (5) par actionnement de chaque accouplement (9, 10).

6. Véhicule automobile selon l'une des revendications précédentes 4 ou 5, une transmission (23) à réduction variable étant disposée entre l'unité d'entraînement (5) et les arbres de sortie (7, 8).
